# EUROPEAN PATENT APPLICATION

(11) **EP 2 716 530 A1**
(43) Date of publication of application: **09.04.2014**
(21) Application number: 13186378.9
(22) Date of filing: 27.09.2013
(51) Int. Cl.: B62D 53/08

(54) **A dolly for coupling a chassis and a combination of a dolly and a trailer**

(30) Priority: 08.10.2012 NL 2009583
(71) Applicant: de Jong, Cornelis, 4214 KA Vuren (NL)
(72) Inventor: de Jong, Cornelis, 4214 KA Vuren (NL)
(74) Representative: Plaggenborg, Menko Bernard

(57) **Abstract**

The invention relates to a dolly (1) for coupling thereto a trailer (11), comprising a frame (2) with wheels (3), a fifth wheel (4) for cooperation with a kingpin provided at said trailer and a frame member (6) that is slidably connectable to a chassis of a towing vehicle, said dolly (1) having a forward side (7) at the side of said towing vehicle and a rear side (8) at the side of the trailer. The dolly comprises a guiding member (5) for longitudinally guiding therein said slidable frame member (6), such that said slidable frame member (6) in a first position at least partly protrudes at a forward position from said dolly's frame (2) and in a second position, which is different from said first position, has been displaced to the rear.

Preference is given to a combination of a dolly and a trailer. The trailer may be a trailer that is coupled at the rear side of the dolly or a trailer behind which the dolly is coupled. The dolly may be coupled to both trailers. The trailer may be provided with a fixed body or may be embodied for transporting a container or a demountable body.

## Description

The present invention relates to a dolly in accordance with the preamble of claim 1.

Such a dolly is known in the art. For example, it is known to couple a trailer to a truck by means of a dolly, such that the trailer is coupled swivably around the truck's fifth wheel and its kingpin.

Such a dolly is mentioned for example in US patent publications US 4955629 and US 5860668. These known dollies comprise a frame to which a fifth wheel and wheels are connected, such that part of said frame can be coupled slidably in a chassis of said truck that is at a more forward position. By sliding said frame more or less within said chassis, the fifth wheel's position with respect to the chassis can be varied. Also, the trailer's position with respect to the forward chassis can be varied.

When connecting a trailer to said dolly the dolly's wheels will provide support to the trailer. This is of use especially when the dolly is not connected to said forward chassis. Such a dolly however has the disadvantage that, when disconnecting same, a considerable part of said dolly protrudes at the forward position.

Another disadvantage is that the trailer can only be coupled in a swivable way to said fifth wheel. There is no possibility of connecting said trailer rigidly to said dolly.

The present invention aims at providing an improved dolly of the kind mentioned in the preamble.

The invention especially aims at providing a dolly as mentioned in the preamble that does not have the disadvantages as indicated above or just in a lesser degree.

The invention also aims at providing an improved dolly eliminating all disadvantages as mentioned above.

So as to obtain at least one of the above mentioned goals, according to a first embodiment the present invention provides a dolly comprising the features mentioned in claim 1. This dolly provides a solution for the disadvantages as mentioned above.

It has also shown that the dolly can be manufactured cheaply but nevertheless provides an excellent stability. Such synergetic result is completely unexpected.

It is especially preferred that said dolly and said slidable frame member, preferably said guiding member and said slidable frame member, comprising mutually cooperating coupling members. This ensures that the slidable frame member, preferably embodied as a hollow beam or the like, can be coupled securely to the dolly at a predetermined position.

It is especially preferred that said slidable frame member comprising a plurality of pre-applied coupling members, preferably embodied as openings, for this ensures the slidable frame member to be connectable to the dolly at a plurality of predetermined positions. This is especially advantageous when it is desired to be able to position the dolly, in a first situation, completely below the trailer and in a second situation, protruding from beneath said dolly or trailer.

A simple coupling can be obtained when said dolly's coupling members and said slidable frame member comprise mutually alignable openings. This way, said coupling may be obtained by means of a locking member to be inserted into said aligned coupling members.

A truck, more in particular a towing vehicle that is to be positioned (when in use) in front of said dolly, may be coupled to said dolly when the end of said slidable frame member, positioned at the dolly's front side, is tapered. Said towing vehicle, for example a truck or a trailer coupled to a truck, will also be provided with a receiving member for at least partly receiving said slidable frame member. Positioning said slidable frame member in said receiving member may easily be obtained when providing said slidable frame member with a tapered end section.

A simple compact construction is obtained when said slidable frame member being positioned below said fifth wheel when in use.

The invention can easily be combined with trailers or chassis that are suitable for carrying containers, fixed bodies or demountable bodies.

By coupling the dolly according to the present invention to a trailer or a chassis for transporting 20 feet containers, the combination using this dolly may also be used for transporting 30 feet containers when the dolly comprises twist locks for coupling a container. To that end, the slidable frame member preferably comprises coupling members at such position that the dolly is positionable at a suitable distance from said trailer or chassis. Anyway, in such embodiment the trailer or chassis should comprise a receiving member for at least partly receiving said slidable frame member.

As a consequence, according to a further aspect the present invention relates to a combination of a dolly according to the present invention and a truck, said truck comprising a receiving member for at least partly receiving said slidable frame member.

In such combination, it is preferred for the truck's receiving member to comprise coupling members for cooperation with coupling members provided at said slidable frame member.

According to a third aspect, the invention also relates to a combination of a dolly according to the present invention and a trailer coupled to said dolly's rear end, wherein the length of said slidable frame member is less than or equal to the total length of the dolly and the trailer. The term "rear end" relates to the position during use that is directed away from the side the truck is positioned. By definition, the truck is positioned at a front side of said combination.

According to said third aspect, the trailer preferably comprises a receiving member for at least partly receiving said slidable frame member.

According to said third aspect, the trailer's receiving member preferably comprises coupling members for cooperation with coupling members provided at said slidable frame member. These coupling members may be embodied as openings that may be aligned with the openings provided in the slidable frame member.

The invention is especially advantageous in that a rigid combination can be obtained, being comprised of [1] the dolly according to the invention, [2] a trailer coupled at a front side and [3] a trailer coupled at said rear side, such that the coupling is obtained by means of the slidable frame member yielding a rigid chassis. Said rigid chassis is to be regarded an individual vehicle, being allowed to conduct its own registration. As a consequence, the invention also relates to a combination of the dolly and a trailer coupled at a first side of said dolly and a trailer coupled at a second, opposite side of said dolly, both trailers being provided with a receiving means for said slidable frame member, such that said slidable frame member is entered in said receiving members of both trailers. Such yields a rigid chassis.

The term trailer also refers to a semi-trailer or any other vehicle comprising wheeled axles that can be connected to said dolly. More in particular, this term relates to a trailer comprising a kingpin to be connected to a fifth wheel of a truck or or of a dolly according to the present invention.

Hereafter, the invention will be described by way of a drawing. The drawing shows in:
Fig. 1 a dolly according to the present invention comprising a slidable frame member in a first position,
Fig. 2 a dolly according to the present invention comprising a slidable frame member in a second position,
Fig. 3 a combination of a dolly and a trailer in a view from below,
Fig. 4 a combination according to Fig. 3 in a side view,
Fig. 5 a combination of a dolly and a truck in a view from below,
Fig. 6 a combination according to Fig. 5 in a side view comprising a slidable frame member in a first position,
Fig. 7 a combination according to Fig. 5 in a side view comprising a slidable frame member in a second position, and
Fig. 8 a combination of a dolly with a truck and a trailer.

In the figures, the same parts have been provided with the same reference numbers. However, not all parts that are required for a practical embodiment have been shown for sake of clarity.

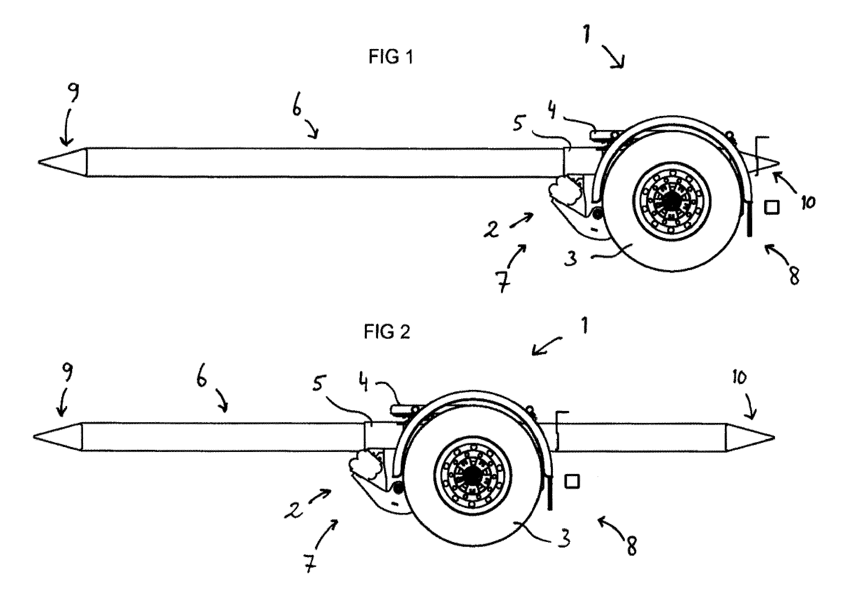

Fig. 1 shows a schematic side view of a dolly 1 according to the present invention. Dolly 1 comprises a chassis 2, to which wheels 3 have been connected. Dolly 1 further comprises a fifth wheel 4, for cooperation with a kingpin of a trailer (not shown) to be connected to dolly 1.

Chassis 2 of dolly 1 comprises a receiving member 5 for a slidable frame member 6. In the embodiment shown in Fig. 1 said slidable frame member 6 has been embodied as a slidable girder 6 to be received in receiving member 5. Fig. 1 shows girder 6 in a position in which it protrudes most at the front side 7 of dolly 1.

Fig. 2 shows dolly 1 according to Fig. 1, with the proviso that slidable girder 6 is positioned such that it protrudes in a lesser extent at the front side 7. Girder 6 protrudes both at the front side 7 and the rear side 8 of dolly 1. Girder 6 has been slit within receiving member 5 towards a second position.

Girder 6 tapers towards front end 9 and rear end 10.

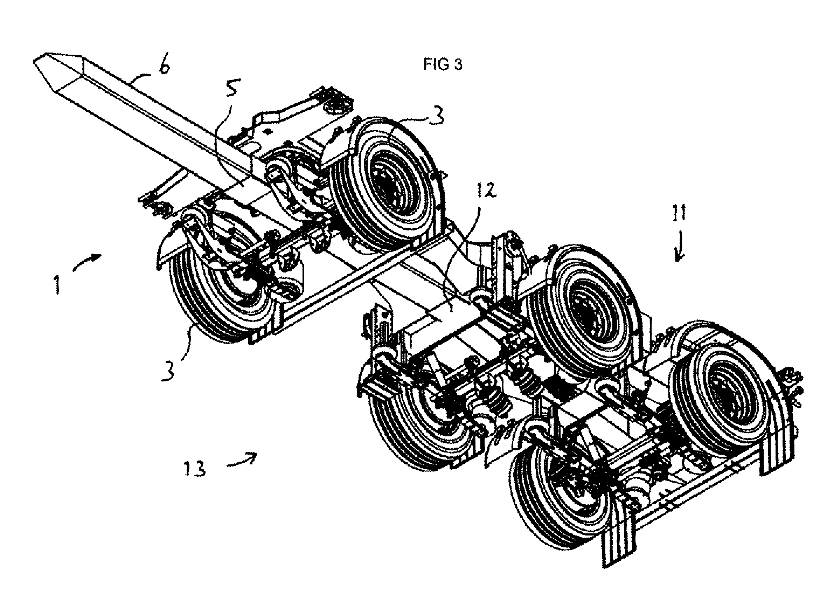

In fig. 3 a dolly 1 according to the present invention has been shown, wherein dolly 1 has been connected at rear side 8 to a trailer 11. Said connection is obtained through a receiving member 12 provided at trailer 11, wherein said girder 6 is at least partly received within said receiving member. Since girder 6 has been received both in receiving member 5 of dolly 1 and in receiving member 12 of trailer 11 a rigid connection is obtained between dolly 1 and trailer 11. Trailer 11 and dolly 1 provide and behave as a single trailer 13 having an extra wheeled axle 3.

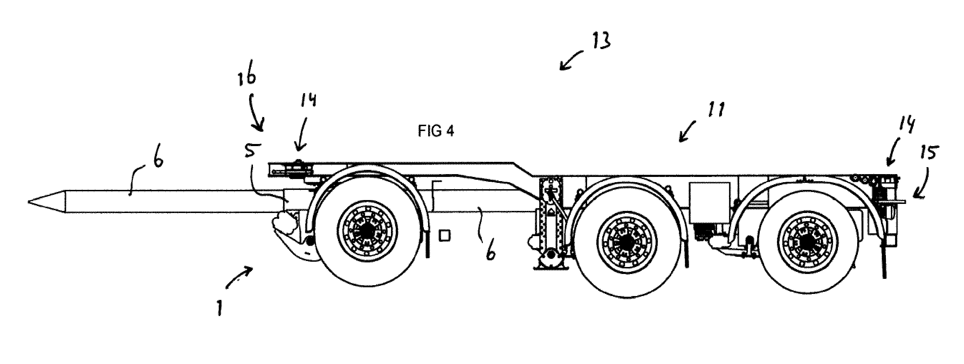

Fig. 4 shows a side view of an extended trailer combination 13, being comprised of dolly 1 according to the present invention and trailer 11. Trailer 11 has also been connected securely to fifth wheel 4 of dolly 1, by means of a king pin (not visible in Fig. 4) that is connected to a coupling frame 14.

So as to be able to keep girder 6 at a preferred position, such that said girder continues to be retained in receiving members 5, 12, both girder 6 and at least one of said receiving members 5, 12 may comprise alignable and cooperating openings in which a locking pin (not shown) may be entered. Furthermore, a coupling member may be provided that is connectable to dolly 1 or trailer 11 and that retains girder 6 in a preferred position.

Trailer 11 comprises twist locks 14 for connecting a container. In the embodiment shown in Fig. 4 said trailer is a goose-neck type trailer, with the consequence that twist locks 14 at the rear side 15 of trailer 11 are positioned lower than twist locks 14 at the front side 16. Twist locks 14 at the rear side 15 of trailer 11 may be provided with extensions so as to be able to transport a container level.

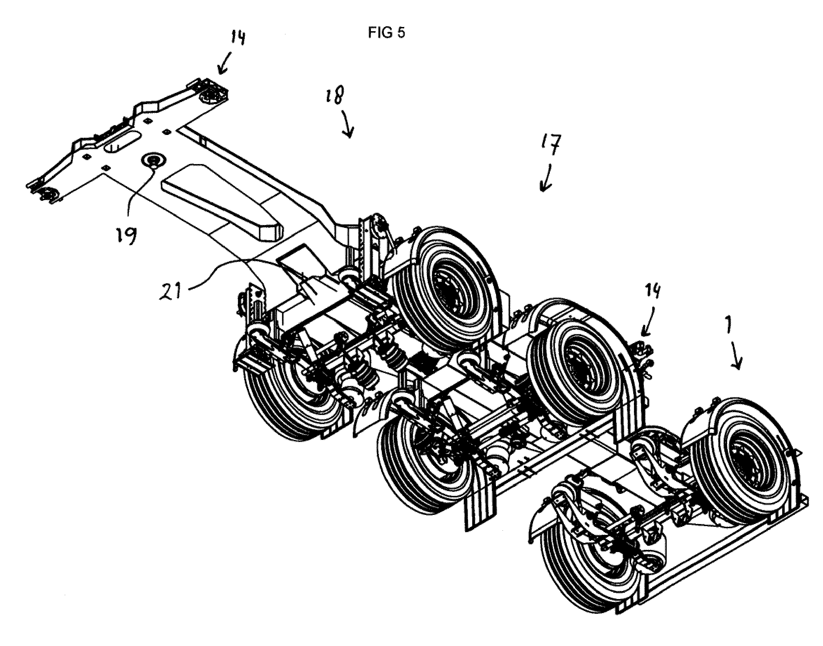

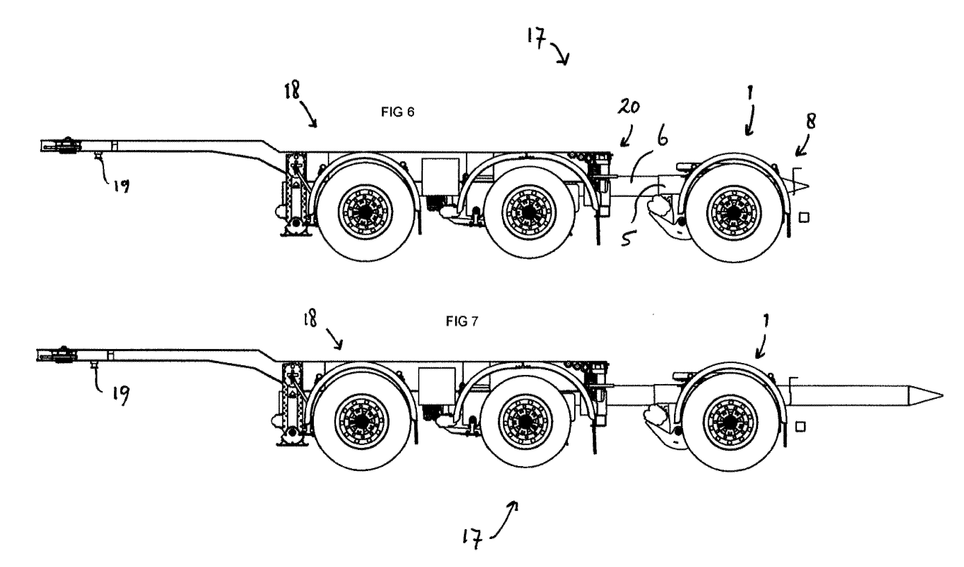

Fig. 5 and Fig. 6 show a variant of a trailer combination 17 obtainable with the dolly 1 according to the present invention. Combination 17 has been built from dolly 1 according to the present invention and trailer 18. Trailer 18 may be of the commonly used type, and which is connected to the fifth wheel of a towing vehicle (or truck) by means of its king pin 19. Trailer 18 is provided with twist locks for connecting a container. Dolly 1 is connected to the rear side 20 of trailer 18. In the embodiment as shown in Fig. 6, girder 6 mainly protrudes at the front side 7 from receiving member 5. This ensures that girder 6 can be mainly received within receiving member 21 of trailer 18. This provides a rigid coupling between trailer 18 and dolly 1. Girder 6 provides this rigid connection. Rear side 8 of dolly 1 is the rear side of said trailer combination 17. A trailer to be coupled to said fifth wheel will be freely swivable when in the position as shown in Fig. 6.

For example, dolly 1 may be provided with twist locks for transporting an extended container (not shown) by means of trailer combination 17. The distance from dolly 1 behind trailer 18 may be set by locking girder 6 to at least one of said dolly and trailer 18, such that the distance between twist locks is suitable for connecting a 30 feet container.

Fig. 7 shows a trailer combination 17 according to Fig. 6, however with the proviso that girder 6 has been displaced to the rear, such that girder 6 is received both within receiving member 5 and within receiving member 21 so as to retain a rigid coupling between trailer 18 and dolly 1.

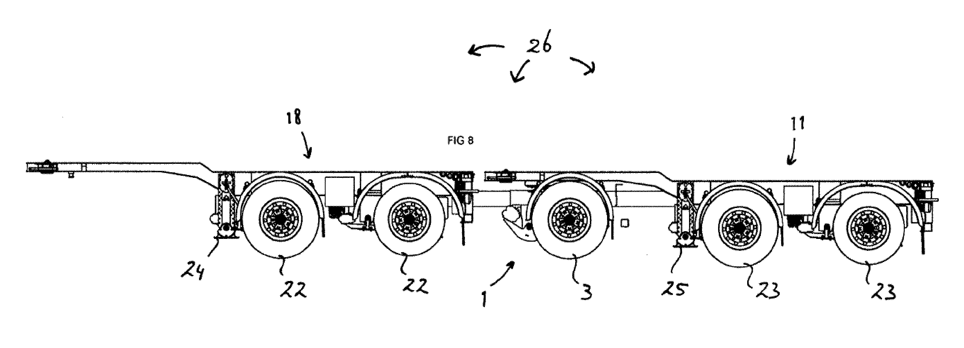

This way, a trailer 11 can be coupled to the rear side 8 of a dolly 1, mainly in the way as indicated before with reference to Fig. 3-4. The resulting combination 26 has been shown in Fig. 8. So as to retain a rigid coupling, it is preferred for girder 6 to be coupled to at least one of trailer 18 and dolly 1. The coupling connection by applying a king pin and a fifth wheel of trailer 11 and dolly 1 already provides for a coupling in longitudinal direction between dolly 1 and trailer 11.

The term "longitudinal direction" relates to the direction from front side 7 and rear side 8.

Coupling the trailers to the girder 6 is facilitated by tapering ends 9, 10 of girder 6. As an alternative, or an addition, a receiving member may comprise a funnel shaped entrance for facilitating entering the girder 6 into said receiving member.

When in use, wheels 22, 23 of trailers 18, 11 are at a similar position, such that said wheels support trailer combination 26 on the ground. One or more wheeled axles may be adjustable in height. Anyway, it is preferred for said axle comprising wheels 3 to be adjustable in height, so as to improve the manoeuvrability of trailer combination 13, 26.

Trailers 18, 11 may be provided with support legs 24, 25 so as to be able to park said trailers without dolly 1.

The invention is not limited to the embodiments as described before and as shown in the drawing. The invention is limited by the claims only.

The invention also relates to every combination of features that have been described above independently of each other.

## Claims

1. A dolly for coupling thereto a trailer, comprising a frame with wheels, a fifth wheel for cooperation with a kingpin provided at said trailer and a frame member that is slidably connectable to a chassis of a towing vehicle, said dolly having a forward side at the side of said towing vehicle and a rear side at the side of the trailer, **characterized in that** said dolly comprises a guiding member for longitudinally guiding therein said slidable frame member, such that said slidable frame member in a first position at least partly protrudes at a forward position from said dolly's frame and in a second position, which is different from said first position, has been displaced to the rear.

2. Dolly according to claim 1, said dolly and said slidable frame member, preferably said guiding member and said slidable frame member, comprising mutually cooperating coupling members.

3. Dolly according to claim 2, said slidable frame member comprising a plurality of pre-applied coupling members, preferably embodied as openings.

4. Dolly according to claim 2 or 3, said dolly's coupling members and said slidable frame member comprising mutually alignable openings.

5. Dolly according to claim 4, comprising a locking member to be inserted into said aligned coupling members.

6. Dolly according to any of the preceding claims, wherein an end of said slidable frame member, positioned at the dolly's front side, is tapered.

7. Dolly according to any of the preceding claims, said slidable frame member being positioned below said fifth wheel when in use.

8. Dolly according to any of the preceding claims, comprising twist locks for coupling a container or a demountable body.

9. A combination of a dolly according to any of the preceding claims and a trailer, wherein the length of said slidable frame member is less than or equal to the total length of the dolly and the trailer.

10. A combination according to claim 9, wherein said trailer comprises a receiving means for at least partly receiving said slidable frame member.

11. A combination according to claim 10 and 11, said trailer's receiving means comprising coupling members for cooperation with coupling members provided at said slidable frame member.

12. A combination of a dolly according to any of claims 1-8 and a truck, said truck comprising a receiving member for at least partly receiving said slidable frame member.

13. A combination according to claim 12, wherein said truck's receiving member comprises coupling members for cooperation with coupling members provided at said slidable frame member.

14. A combination of a dolly according to any of claims 1-8, a trailer coupled at a first side of said dolly and a trailer coupled at a second, opposite side of said dolly, both trailers being provided with a receiving means for said slidable frame member, such that said slidable frame member is entered in said receiving members of both trailers.
